# EUROPÄISCHE PATENTSCHRIFT

(11) **EP 4 323 663 B1**
(45) Veröffentlichungstag und Bekanntmachung des Hinweises auf die Patenterteilung: **15.05.2024**
(21) Anmeldenummer: 22713934.2
(22) Anmeldetag: 11.03.2022
(51) Int. Cl.: F16C 33/08, F16C 33/14, F16C 43/02, F16C 17/02

(54) **VERFAHREN ZUR HERSTELLUNG EINER GLEITLAGERANORDNUNG**
METHOD FOR MANUFACTURING A SLIDING BEARING ARRANGEMENT
PROCÉDÉ DE FABRICATION D'UN AGENCEMENT DE PALIER LISSE

(30) Priorität: 15.04.2021 DE 102021109432
(43) Veröffentlichungstag der Anmeldung: 21.02.2024
(73) Patentinhaber: Voith Patent GmbH, 89522 Heidenheim (DE)
(72) Erfinder: ROHRER, Martin, 3161 St. Veit/Gölsen (AT)
(74) Vertreter: Voith Patent GmbH - Patentabteilung
(86) Internationale Anmeldenummer: PCT/EP2022/056285
(87) Internationale Veröffentlichungsnummer: WO 2022/218622

(56) Entgegenhaltungen:
- EP-A2- 0 306 065
- CH-A2- 703 367
- DE-B4-102016 101 709

## Beschreibung

Die Erfindung betrifft eine Gleitlageranordnung zur radialen Lagerung eines Zapfens bzw. eines Kolbens bzw. eines Ringes in einem Stahlgehäuse. Dabei ist der Begriff Gehäuse sehr weit zu fassen, d.h. ein solches Gehäuse kann eine beliebige Struktur aus Stahl sein, in der ein Zapfen, Kolben oder ein Ring radial gelagert wird. Zwischen dem Gehäuse und dem gelagerten Element ist eine metallische Lagerschicht aus einem tribologisch günstigen Lagerwerkstoff angeordnet. Als Beispiel für einen solchen Lagerwerkstoff sei hier CuAl genannt. Dabei kann der Zapfen, Kolben oder Ring in der Lageranordnung sowohl bzgl. einer Dreh- als auch bzgl. einer Axialbewegung gelagert sein.

Bei der Herstellung einer solchen Lageranordnung muss die Lagerschicht mit dem Gehäuse verbunden werden. In diversen Anwendungen ist es zudem notwendig, dass diese Verbindung dichtend ausgeführt wird. Als erstes Beispiel einer solchen Anwendung sei die Lagerung der Laufschaufelflügel im Nabengehäuse eines Kaplan-Turbinenlaufrades genannt (siehe beispielsweise die US 3 822 104 B). Als zweites Beispiel einer solchen Anwendung sei die axiale Lagerung der Dichtungsringe in großen Kugelschiebern für Wasserkraftanlagen genannt (vgl. CH 685 833 A5, siehe die verschiebbar geführten Ringe 11 und 20 in Fig. 2).

Zur Verbindung der Lagerschicht mit dem Gehäuse sind verschiedene Verfahren bekannt geworden.

Ein mögliches Verfahren sieht dabei vor die Lagerschicht als Buchse auszuführen, welche anschließend um etwa 100°C bis 250°C unter Raumtemperatur abgekühlt wird. Aufgrund der dadurch verursachten Kontraktion kann die Buchse in das Gehäuse eingebracht werden. Die Verbindung zwischen Gehäuse und Lagerschicht ergibt sich durch die anschließende Erwärmung der Buchse und der dadurch verursachten Ausdehnung derselben. Ein solches Verfahren wird in der DE 10 2016 101 709 B4 offenbart. Alternativ kann auch das Gehäuse vor der Verbindung erwärmt werden (siehe die GB 1 181 472).

Ein anderes Verfahren sieht vor, dass die Lagerschicht durch Auftragsschweißen oder Auftragslöten aufgebracht wird (DE 10 2004 018 921 A1). Ein weiteres Verfahren sieht vor, die Lagerschicht mittels eines thermischen Spritzverfahrens aufzubringen (DE 43 03 592 A1).

Die Aufgabe der Erfindung ist es, ein alternatives Verfahren zur Herstellung einer Gleitlageranordnung anzugeben, das sich dadurch auszeichnet, dass die Verbindung zwischen Gehäuse und Lagerschicht den für die oben genannten Anwendungen notwendigen Dichtigkeitsanforderungen genügt.

Die Aufgabe wird erfindungsgemäß durch ein Verfahren entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Lageranordnung in einer ersten Ausführungsform
- Fig.2: Lageranordnung in einer zweiten Ausführungsform
- Fig.3: Schweißvorgang

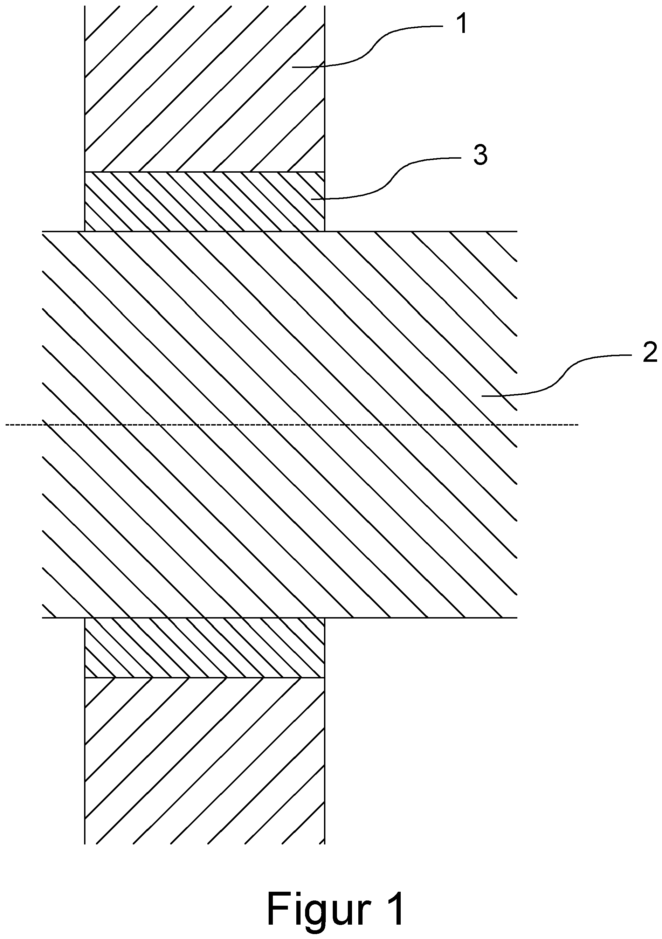

Figur 1 zeigt eine Lageranordnung in einer ersten Ausführungsform in stark schematischer Darstellung. Bei der dargestellten Lageranordnung handelt es sich um eine Lageranordnung zur radialen Lagerung eines Elementes in einem Gehäuse aus Stahl. Es ist klar, dass das gelagerte Element eine entsprechende Kontur aufweisen muss, da eine radiale Lagerung eine radialsymmetrische Außenkontur des gelagerten Elementes erfordert - wenigstens in Bezug auf den Bereich der Außenkontur des Elementes, welcher mit der Lagerung interagiert. Mit anderen Worten muss das gelagerte Element also einen Bereich mit zylindrischer Außenkontur umfassen. Das gelagerte Element kann also beispielsweise einen Bereich umfassen, welcher als Zapfen oder als Kolben oder als Ring ausgebildet ist. Figur 1 zeigt einen Schnitt durch die Lageranordnung, wobei der Schnitt so ausgeführt ist, dass die Symmetrieachse des gelagerten Elementes in der Schnittebene liegt. In Figur 1 ist die Symmetrieachse durch die gestrichelte Linie angedeutet.

In der in Figur 1 dargestellten Ausführungsform umfasst das gelagerte Element einen Bereich, welcher als massiver Zapfen ausgebildet ist. Dabei ist das gelagerte Element mit 2 bezeichnet. Das Gehäuse, in welchem das Element 2 gelagert ist, ist mit 1 bezeichnet. Zwischen dem Gehäuse 1 und dem gelagerten Element 2 ist eine metallische Lagerschicht aus einem tribologisch günstigen Lagerwerkstoff angeordnet. Als Lagerwerkstoff kommen diverse Metalllegierungen in Frage, z.B. CuAI oder andere als Bronzen bezeichnete Legierungen. Die Lagerschicht ist als Hohlzylinder ausgebildet und mit 3 bezeichnet. Ein solcher Hohlzylinder aus Lagermaterial wird gewöhnlich auch als Lagerbuchse bezeichnet.

Die Lageranordnung dient dazu eine Relativbewegung des gelagerten Elementes 2 in Bezug auf das Gehäuse 1 zu ermöglichen. Dabei kann es sich um eine Rotation des Elementes 2 um die Symmetrieachse handeln. Es kann sich auch um eine Translationsbewegung entlang der Symmetrieachse oder um eine Kombination der beiden genannten Bewegungsarten handeln.

Die in Figur 1 dargestellte Ausführungsform kann in einem Turbinenlaufrad vom Typ Kaplan zur Anwendung kommen. Dabei wäre das Gehäuse 1 das Nabengehäuse des Turbinenlaufrades und das gelagerte Element 2 wäre ein Zapfen, welcher mit einer Laufschaufel des Laufrades verbunden ist. Die Lageranordnung gewährleistet dabei die Verstellbarkeit der Laufschaufeln durch eine Drehbewegung der Zapfen um ihre Symmetrieachse.

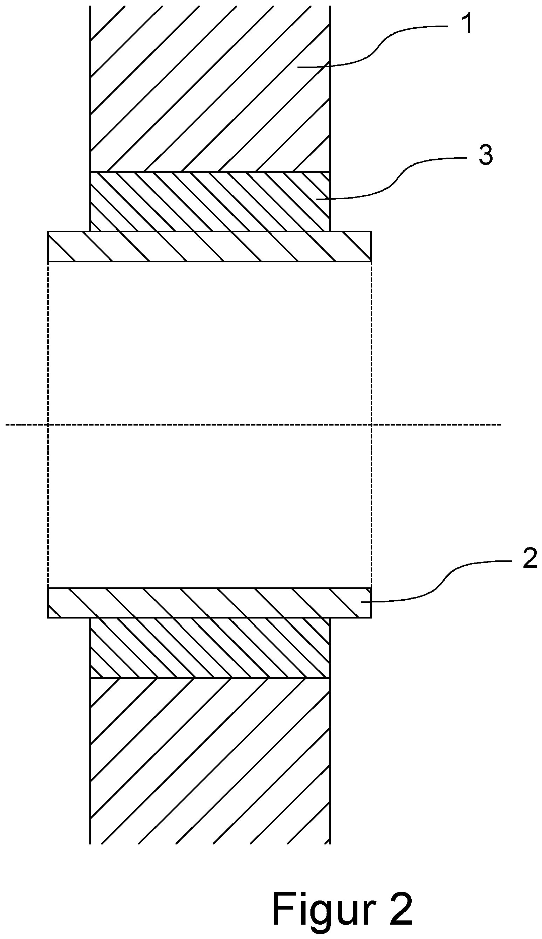

Figur 2 zeigt eine Lageranordnung in einer zweiten Ausführungsform in analoger Darstellung zu Figur 1. Im Unterschied zu Figur 1 ist das gelagerte Element 2 als Hohlzylinder bzw. Ring ausgeführt. Ansonsten gilt das, was zu Figur 1 gesagt wurde, auch für Figur 2.

Die in Figur 2 dargestellte Ausführungsform kann in einem Kugelschieber für eine Wasserkraftanlage zur Anwendung kommen. Dabei wäre das Gehäuse 1 das Gehäuse des Kugelschiebers und das gelagerte Element 2 wäre ein axial verschiebbarer Ring, welcher mit einer Dichtung des Kugelschiebers verbunden ist. Die Lageranordnung gewährleistet dabei die Verschiebung eines Dichtungsringes durch eine Axialbewegung des gelagerten Rings entlang seiner Symmetrieachse.

Das erfindungsgemäße Herstellungsverfahren umfasst folgende Schritte:
S1: Bereitstellung des Gehäuses 1;
S2: Bereitstellung der Lagerbuchse 3;
S3: Einschieben der Lagerbuchse 3 in das Gehäuse 1;
S4: Verschweißen der Lagerbuchse 3 mit dem Gehäuse 1.

Dabei umfasst der Schritt S2 die folgenden Unterschritte:
S2A: Bereitstellen von Lagermaterial in Stangenform;
S2B: Rollen des in Schritt S2A bereitgestellten Lagermaterials zu einem Ring, welcher die Lagerbuchse 3 bildet;
S2C: Verschweißen der Ringnaht;
S2D: Bearbeitung des Ringes bzgl. Außen- und Innenkontur.

Dabei wird im Schritt S2D die Außenkontur der Lagerbuchse 3 so bearbeitet, dass die Lagerbuchse 3 in Schritt S3 problemlos bei Raumtemperatur in das Gehäuse 1 eingeschoben werden kann.

Das Verschweißen der Lagerbuchse 3 mit dem Gehäuse 1 in Schritt S4 erfolgt dabei mittels Elektronenstrahlschweißens, wobei beim Schweißvorgang das Material des Gehäuses 1 aufgeschmolzen wird. Das Gehäuse 1 besteht aus Stahl, welcher eine Schmelztemperatur von ungefähr 1500 °C aufweist. Gängiges Lagermaterial (z.B. CuAI) hat hingegen eine Schmelztemperatur von ungefähr 950 °C. Der Schweißvorgang wird außerdem so ausgeführt, dass zwischen der Innenkontur des Gehäuses 1 und der Außenkontur der Lagerbuchse 3 eine vollflächige Verbindung hergestellt wird.

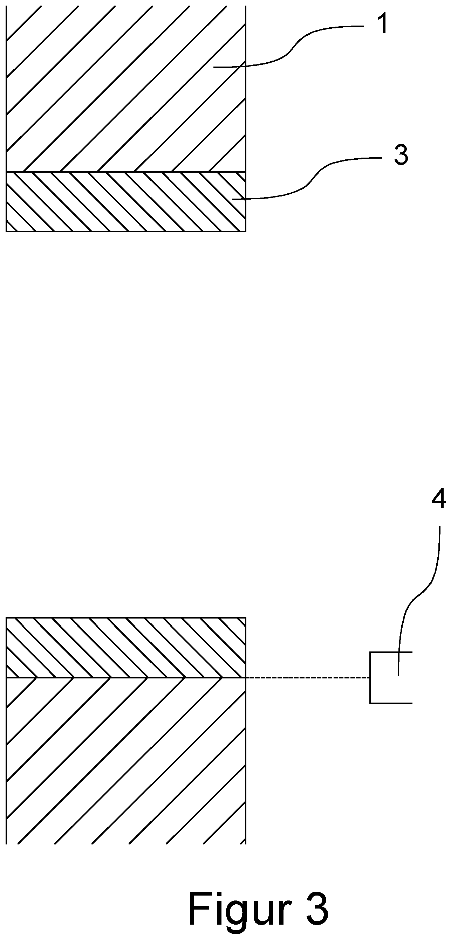

Figur 3 zeigt den Vorgang des Verschweißens der Lagerbuchse 3 mit dem Gehäuse 1. Dabei wird der Elektronenstrahl durch die gestrichelte Linie angedeutet. Die Elektronenstrahlquelle ist mit 4 bezeichnet. Die dargestellte Anordnung ist dabei rein schematisch zu verstehen. In der Regel wird man die Elektronenstrahlquelle viel näher an die zu verschweißenden Bauteile (Gehäuse 1 und Lagerbuchse 3) heranführen. Der Elektronenstrahl wird beim Verscheißen so geführt, dass er den gesamten Spalt zwischen Gehäuse 1 und Lagerbuchse 3 überstreicht.

Das erfindungsgemäße Verfahren ermöglicht eine sehr feste und gleichzeitig dichte Verbindung zwischen Gehäuse 1 und Lagerbuchse 3, welches daher bestens für die beschriebenen Anwendungsfälle geeignet ist. Das erfindungsgemäße Verfahren kann jedoch auch für andere Anwendungsfälle vorteilhaft verwendet werden, insbesondere wenn die betreffenden Anwendungsfälle ähnliche Anforderungen stellen, wie die beschriebenen Anwendungsfälle.

### Bezugszeichenliste

- 1: Gehäuse
- 2: Gelagertes Element
- 3: Lagerbuchse
- 4: Elektronenstrahlquelle

## Patentansprüche

1. Verfahren zur Herstellung einer Gleitlageranordnung zur radialen Lagerung eines Elementes (2) in einem Gehäuse (1) aus Stahl, wobei zwischen dem Gehäuse (1) und dem Element (2) eine Lagerbuchse (3) aus einem tribologisch günstigen metallischen Lagerwerkstoff, das heißt aus CuAI oder aus anderen als Bronzen bezeichneten Legierungen, angeordnet ist, und wobei das Verfahren die folgenden Schritte umfasst:
S1: Bereitstellung des Gehäuses (1);
S2: Bereitstellung der Lagerbuchse (3);
S3: Einschieben der Lagerbuchse (3) in das Gehäuse (1);
S4: Verschweißen der Lagerbuchse (3) mit dem Gehäuse (1);
und wobei der Schritt S2 die folgenden Unterschritte umfasst:
S2A: Bereitstellen von Lagermaterial in Stangenform;
S2B: Rollen des in Schritt S2A bereitgestellten Lagermaterials zu einem Ring, welcher die Lagerbuchse (3) bildet;
S2C: Verschweißen der Ringnaht;
S2D: Bearbeitung des Ringes bzgl. Außen- und Innenkontur;
und wobei im Schritt S2D die Außenkontur der Lagerbuchse (3) so bearbeitet wird, dass die Lagerbuchse (3) in Schritt S3 bei Raumtemperatur in das Gehäuse (1) eingeschoben werden kann, und wobei das Verschweißen der Lagerbuchse (3) mit dem Gehäuse (1) in Schritt S4 mittels Elektronenstrahlschweißens erfolgt, und wobei beim Schweißvorgang in Schritt S4 das Material des Gehäuses (1) aufgeschmolzen wird, und wobei dieser Schweißvorgang so ausgeführt wird, dass zwischen der Innenkontur des Gehäuses (1) und der Außenkontur der Lagerbuchse (3) eine vollflächige Verbindung hergestellt wird.

2. Verfahren zur Herstellung einer Gleitlageranordnung nach Anspruch 1, wobei der Lagerwerkstoff CuAI ist.

3. Verfahren zur Herstellung einer Gleitlageranordnung nach Anspruch 1 oder 2, wobei das Gehäuse (1) ein Nabengehäuse eines Turbinenlaufrades vom Typ Kaplan ist, und das Element (2) ein Zapfen ist, welcher mit einer Laufschaufel des Turbinenlaufrades verbunden ist, und wobei der Zapfen in der Gleitlageranordnung drehbar gelagert ist.

4. Verfahren zur Herstellung einer Gleitlageranordnung nach Anspruch 1 oder 2, wobei das Gehäuse (1) ein Gehäuse eines Kugelschiebers für eine Wasserkraftanlage ist, und das Element (2) ein Ring ist, welcher mit einer Dichtung des Kugelschiebers verbunden ist, und wobei der Ring in der Gleitlageranordnung axial verschiebbar gelagert ist.

## Claims

1. Method of manufacturing a plain bearing arrangement for the radial mounting of an element (2) in a housing (1) of steel, wherein a bearing bush (3) of a tribologically favourable metallic bearing material, that is to say of CuAI or of other alloys designated as bronzes, is arranged between the housing (1) and the element (2), and wherein the method comprises the following steps:
S1: providing the housing (1);
S2: providing the bearing bush (3);
S3: inserting the bearing bush (3) into the housing (1);
S4: welding the bearing bush (3) to the housing (1);
and wherein the step S2 comprises the following substeps:
S2A: providing bearing material in bar form;
S2B: rolling the bearing material provided in step S2A into a ring which forms the bearing bush (3);
S2C: welding the ring seam;
S2D: machining the ring with respect to the outer and inner contour;
and wherein in step S2D the outer contour of the bearing bush (3) is machined so that the bearing bush (3) can be inserted into the housing (1) at room temperature in step S3, and wherein the welding
of the bearing bush (3) to the housing (1) is carried out in step S4 by means of electron beam welding, and wherein the material of the housing (1) is melted during the welding process in step S4, and wherein this welding process is carried out in such a way that a full-surface connection is produced between the inner contour of the housing (1) and the outer contour of the bearing bush (3).

2. The method of manufacturing a plain bearing arrangement according to claim 1, wherein the bearing material is CuAI.

3. Method of manufacturing a plain bearing arrangement according to claim 1 or 2, wherein the housing (1) is a hub casing of a Kaplan-type turbine runner, and the element (2) is a journal which is connected to a rotor blade of the turbine runner, and wherein the journal is rotatably mounted in the plain bearing arrangement.

4. Method of manufacturing a plain bearing arrangement according to claim 1 or 2, wherein the housing (1) is a housing of a ball valve for a hydroelectric power plant, and the element (2) is a ring which is connected to a seal of the ball valve, and wherein the ring is axially displaceably mounted in the plain bearing arrangement.

## Revendications

1. Procédé de fabrication d'un dispositif de palier lisse pour le montage radial d'un élément (2) dans un boîtier (1) en acier, un coussinet (3) en un matériel de stockage métallique tribologiquement favorable, c'est-à-dire en CuAl ou en d'autres alliages appelés bronzes, étant disposé entre le boîtier (1) et l'élément (2), et le procédé comprenant les étapes suivantes:
S1 : fourniture du boîtier (1) ;
S2 : fourniture du coussinet (3) ;
S3 : insertion du coussinet (3) dans le boîtier (1) ;
S4 : soudage du coussinet (3) sur le boîtier (1) ;
et dans lequel l'étape S2 comprend les sous-étapes suivantes :
S2A : fournir du matériel de stockage sous forme de barre ;
S2B : rouler le matériel de stockage fourni à l'étape S2A en un anneau qui forme le coussinet (3) ;
S2C : souder le joint de l'anneau ;
S2D : usiner l'anneau en termes de forme et d'épaisseur.
contour extérieur et intérieur ;
et dans lequel, à l'étape S2D, le contour extérieur du coussinet (3) est usiné de telle sorte que le coussinet (3) peut être inséré dans le boîtier (1) à température ambiante à l'étape S3, et dans lequel le soudage du coussinet (3) au boîtier (1) à l'étape S4 est effectué par soudage par faisceau d'électrons, et dans lequel, lors de l'opération de soudage à l'étape S4, le matériau du boîtier (1) est fondu, et dans lequel cette opération de soudage est réalisée de telle sorte qu'une liaison sur toute la surface est établie entre le contour intérieur du boîtier (1) et le contour extérieur du coussinet (3).

2. Procédure de fabrication d'un dispositif de palier lisse selon la revendication 1, dans laquelle le matériel de stockage est du CuAI.

3. Procédé de fabrication d'un dispositif de palier lisse selon la revendication 1 ou 2, dans lequel le boîtier (1) est un boîtier de moyeu d'une roue de turbine de type Kaplan, et l'élément (2) est un tourillon qui est relié à une aube mobile de la roue de turbine, et dans lequel le tourillon est supporté de manière rotative dans le dispositif de palier lisse.

4. Procédé de fabrication d'un dispositif de palier lisse selon la revendication 1 ou 2, dans lequel le boîtier (1) est un boîtier de vanne sphérique pour une installation hydroélectrique, et l'élément (2) est une bague qui est reliée à un joint d'étanchéité de la vanne sphérique, et dans lequel la bague est montée de manière à pouvoir se déplacer axialement dans le dispositif de palier lisse.
